# EUROPEAN PATENT SPECIFICATION

(11) **EP 3 287 249 B1**
(45) Date of publication and mention of the grant of the patent: **25.12.2019**
(21) Application number: 16185077.1
(22) Date of filing: 22.08.2016
(51) Int. Cl.: B29C 44/18, C09K 3/10, B29C 44/12, B29K 21/00, B29L 31/30

(54) **VEHICLE BODY ARRANGEMENT**
FAHRZEUGKAROSSERIEANORDNUNG
AGENCEMENT DE CORPS DE VÉHICULE

(43) Date of publication of application: 28.02.2018
(73) Proprietor: Volvo Car Corporation, 40 531 Göteborg (SE)
(72) Inventor: Al-Kattan, Hayder, 42339 Torslanda (SE)
(74) Representative: Kransell & Wennborg KB

(56) References cited:
- US-A- 4 708 351
- US-A1- 2012 146 296
- US-A1- 2012 324 699
- US-A1- 2013 269 787

## Description

### TECHNICAL FIELD

The invention relates to a vehicle body arrangement comprising a sealer. The sealer has the ability, in an initial state, to be pre-shaped to an initial shape. The sealer upon fluid contact has the ability to expand to a final shape and to a final state where the final shape conforms substantially to a shape of a part of a vehicle body cavity or to a vehicle body cavity thereby sealing the part of the vehicle body cavity or the vehicle body cavity. The invention also relates to a method for sealing a vehicle body cavity in a vehicle body arrangement with a sealer.

### BACKGROUND ART

In today's vehicles, sealants of various kinds are used to fill and/or seal hollow structures or cavities. Such cavities can be found in structures where two metal sheets are combined to form structures. Such structures can for instance be the pillars, parts of the engine room and other parts of the chassis or vehicle body panels.

Some sealants used today are heat activated, meaning that they are moulded to a shape and placed in the cavity. The vehicle or vehicle part is then exposed to heat, whereupon the sealant expands and fills the cavity. One problem with heat activation is that it requires a lot of energy in order to expose the vehicle or vehicle part to the temperature required to activate the sealant.

Other sealants can be activated to expand upon fluid contact, for instance when driving during or after rainfall. However, these sealants return to their original shape when they dry. There also exist foam sprays which cannot cover the entire cavity and the final shape of the foam spray is not regular and cannot be controlled. It is thus not certain that sealing with foam spray certainly seals the cavity. US 2013/0269787 A1 discloses a water swellable rubber composition which is swellable with water or aqueous fluids. The water swellable rubber composition comprises a non-water swellable base rubber, a crosslinkable ethylene oxide based hydrophilic elastomer having at least one curable function group and a water swellable non-elastomeric material.

There is thus a need for a vehicle sealant which addresses these problems.

### SUMMARY OF THE INVENTION

The object of the present invention is to provide an inventive vehicle body arrangement comprising a sealer and a method for sealing a vehicle body cavity. The sealer has the ability, in an initial state, to be pre-shaped to an initial shape. The sealer upon fluid contact has the ability to expand to a final shape and to a final state where the final shape conforms substantially to a shape of a part of a vehicle body cavity or to a vehicle body cavity thereby sealing the part of the vehicle body cavity or the vehicle body cavity. This object is achieved by the features of the characterizing portion of claims 1 and 10. Additional features of the invention are set out in the dependent claims.

The invention relates to a vehicle body arrangement comprising a sealer. The sealer has the ability, in an initial state, to be pre-shaped to an initial shape. The sealer upon fluid contact has the ability to expand to a final shape and to a final state where the final shape conforms substantially to a shape of a part of a vehicle body cavity or to a vehicle body cavity thereby sealing the part of the vehicle body cavity or the vehicle body cavity. The sealer is made from a fluid swellable rubber composition comprising:
- a non-fluid swellable base rubber,
- a crosslinkable ethylene oxide based hydrophilic elastomer having at least one curable functional group, and
- a fluid swellable non-elastomeric material.

The sealer is part of a sandwich construction, wherein the sandwich construction further comprises a fluid layer placed on top of the sealer.

Not according to the invention, the fluid swellable rubber composition may be activated by fluid in the initial state wherein the sealer essentially retains its final state after the sealer has dried and/or is exposed to heat.

One advantage with this vehicle body arrangement is that it is no longer necessary to activate the expansion of the sealer by heat. Instead a fluid can be used to activate the expansion of the sealer. This removes the use for heat treatment of the vehicle or parts of the vehicle in order to achieve the desired sealing effect. Additionally, a sealer according to the above described embodiment retains its final shape after the sealer has dried and/or is exposed to heat thereby providing a permanent sealing of part of the vehicle body cavity or the entire vehicle body cavity of the vehicle body arrangement. A vehicle body arrangement using such a sealer to fill a cavity can be used to seal against moisture or fluid penetration, noise reduction by closing air channels, minimizing air movement within the vehicle body arrangement and reducing metal vibrations by functioning as a dampening material.

With initial state is meant the state the sealer is in before it is activated with fluid. With final state is meant the state the sealer is in after it has been activated by fluid and has reached its final shape. The final state is not necessarily a saturated state but can be a state in which only a specific desired expansion is reached. Once a final unsaturated state is reached no more fluid is used to further expand the sealer.

The fluid swellable rubber composition may comprise a compatibilizing agent. It could be advantageous to consider the compatibility of the base rubber with the crosslinkable ethylene oxide based hydrophilic polymer and the fluid swellable material in the compounding of the fluid swellable rubber composition. One factor in this compatibility is the degree of polarity of the base rubber and the amount of the base rubber relative to the amounts of the hydrophilic polymer and the fluid swellable material. Where the base rubber is non-polar or the base rubber is present in a large quantity, the addition of a compatibilizing agent helps to produce a composition having stable fluid swell properties. The polarity characteristics of rubbers are known, and the inclusion of a compatibilizing agent may be based on the polarity of the base rubber used in a particular composition. Alternatively, assessing the need to use a compatibilizing agent can be done by preparing a test mixture of the three components (base rubber, crosslinkable ethylene oxide based hydrophilic polymer and fluid swellable non-elastomeric material). If visual observation of the mixture reveals that the rubber is not sufficiently blended with the two other components and, for example when there is visible phase separation, then a compatibilizing agent may be added.

The fluid swellable rubber composition having stable swelling property at high temperatures is known as such. Examples of the base rubber used in the composition may be a natural rubber such as polyisoprene or a synthetic rubber including synthetic polyisoprene. Suitable synthetic rubbers may be acrylonitrile-butadiene rubber (NBR), carboxylated NBR (XNBR), hydrogenated acrylonitrile-butadiene rubber (HNBR), carboxylated HNBR (HXNBR), epichlorohydrin rubber (ECO), acrylic rubber (ACM), ethylene-propylene rubber (EPDM), chloroprene rubber. butadiene rubber, styrene-butadiene rubber, fluororubber, silicone rubber, urethane rubber, and isoprene-propylene rubber. The base rubber may comprise one rubber or a mixture of two or more rubbers.

The ethylene oxide elastomer used in the composition has at least one curable functional group recurring throughout the polymer chain and/or in side groups of the polymer chain.

Examples of the curable functional group are: hydroxyl, carboxyl, epoxy, amino, oxime, vinyl, oxazoline, anhydride, and amide.

Ethylene oxide based hydrophilic elastomers having a carboxylic acid group or a vinyl group are commonly available and may be used in the composition. The ethylene oxide elastomer may comprise other monomers in addition to ethylene oxide and the monomer providing the crosslinkable site. The ethylene oxide elastomer may be a single ethylene oxide elastomer having at least one curable functional group, or may be a mixture of two or more ethylene oxide elastomers having at least one curable functional group. Other examples of suitable elastomers are ethylene oxide terpolymers, for instance ethylene oxide-propylene oxide-allyl glycidyl ether terpolymers.

As an example, a fluid swellable non-elastomeric material including super absorbent polymers (SAP) as well as other fluid swellable organic or inorganic materials can be used. The fluid swellable non-elastomeric material (c) may be a single fluid swellable non-elastomeric material, or may be a mixture of two or more of such fluid swellable non-elastomeric material. The following proportions for the respective components of the fluid swellable rubber composition provide a good balance of swelling properties and stability at high temperatures:
- Non-fluid swellable base rubber: 100 phr,
- Crosslinkable ethylene oxide based hydrophilic elastomer: 10-200 phr,
- Fluid swellable non-elastomeric material: 50-200 phr.
Not according to the invention, the sealer may expand during assembly of the vehicle by means of one or more of:
- lowering the vehicle body into a fluid bath,
- passing the vehicle body through a washing stage,
- spraying fluid directly onto the sealer.

One advantage with this is that it is possible to use an existing stage in the process where the vehicle body arrangement is lowered into a fluid bath or passed through a washing stage. Alternatively, an assembler at the assembly line can initiate expansion by spraying fluid directly onto the sealer.

The sealer may expand by means of that the sandwich construction is punctured such that the fluid in the fluid layer contacts the sealer.

One advantage with this embodiment is that it is possible to control the amount of fluid in the fluid layer, thereby controlling the amount of expansion of the sealer. This is useful in case it is not desired that the sealer is saturated and reaches its maximum expansion in the final state. The puncturing can be done by any sharp tool that is able to punch through both layers. Alternatively, a fluid layer can be placed on both sides of the sealer to ensure a good fluid transport into the sealer.

The volume of fluid in the fluid layer may determine the final state expansion of the sealer. For instance in one example an expansion of the volume by 10 % is desired. In these cases a specific volume of fluid required to reach this expansion is placed in the fluid layer. The surface of the sealer or the fluid layer is coated or otherwise prepared such that no further fluid can reach the sealer after the sealer has reached this amount of expansion. This prevents unwanted further expansion of the sealer which could interfere with the desired function or with surrounding parts of the vehicle body arrangement.

The sealer may comprise through holes. The through holes are used as cable ducts or used for drainage of excess fluid in the vehicle body arrangement after activation and keep their shape during expansion of the sealer by means of O-rings placed in the through holes. If the through holes are not used for cable ducts the through holes may be sealed with a rubber plug once the final shape has been reached to ensure that no further fluid can penetrate the cavity in which the sealer is placed.

The sealer may comprise fastening means for attaching the sealer in the vehicle body cavity when the sealer is in the initial state.

The fastening means may be one or more of:
- one or more protrusions extending from the sealer,
- one or more adhesive layers affixed to the sealer.

Alternatively, the vehicle body arrangement may comprise fastening means which the sealer can be pressed into in order to keep the sealer in place.

By using fastening means the sealer can be kept in place in the vehicle body cavity in its initial state when the sealer otherwise would have not been able to stay in place. By using protrusions, small holes in the vehicle body arrangement can be used to interact with the protrusions in order to place the sealer in its intended place. Alternatively, the protrusions of the sealer can be pressed against the inner walls of the vehicle body arrangement and be kept in place by means of the friction between the inner walls of the vehicle body arrangement and the protrusions. The protrusions may in this example be flexible such that they also exert a pressure on the vehicle body arrangement.

When using adhesive layers the sealer can be adhesively attached to a vehicle body surface. A sealer with one or more adhesive layers can for instance be placed on an inner wall of a balk or pillar in order to seal the space within the balk or pillar. Further examples are placing the sealer between the engine hood and the balks supporting the engine hood. The sealer can also be used in the roof construction, door construction, motor rail, front body hinge pillar, rocker, wheel house and cowl.

The invention further relates to a method for sealing a vehicle body cavity, wherein the method comprises:
- pre-shaping a sealer to an initial shape,
- placing the sealer into a vehicle body cavity,
- activating the sealer with fluid, causing the sealer to expand to a final shape conforming substantially to a shape of a vehicle body cavity, thereby sealing the vehicle body cavity,
wherein the sealer comprises a fluid swellable rubber composition comprising:
- a non-fluid swellable base rubber,
- a crosslinkable ethylene oxide based hydrophilic elastomer having at least one curable functional group, and
- a fluid swellable non-elastomeric material,
wherein the method further comprises:
- placing a fluid layer on top of the sealer forming a sanwich construction,
- activating the sealer by puncturing the fluid layer and the sealer.

A method for sealing a vehicle body cavity using a sealer that retains its final state provides the same advantages as described in conjunction with the sealer above.

The method may further comprise:
- activating the sealer with fluid during assembly of the vehicle by means of one or more of:
   - lowering the body into a fluid bath,
   - passing the body through a washing stage,
   - spraying fluid onto the sealer.

The method may further comprise:
- providing the sealer with fastening means for attaching the sealer in the vehicle body cavity when the sealer is in the initial state,
wherein the fastening means is one of:
- protrusions extending from the sealer,
- an adhesive layer affixed to the sealer.

The method may further comprise:
- providing through holes in the sealer.

### BRIEF DESCRIPTION OF THE DRAWINGS

Figure 1 schematically shows the assembly of a vehicle body part including a sealer according to a first example embodiment,
Figure 2 schematically shows a close up of the sealer positioned in the vehicle body cavity of figure 1,
Figures 3a-3c schematically shows the expansion a sealer from an initial state to a final state.
Figure 4 schematically shows a sealer according to a second example embodiment.
Figure 5 schematically shows a sealer comprising a first example of fastening means,
Figure 6 schematically shows a sealer comprising a second example of fastening means,
Figures 7a-7b schematically show a sealer according to a third example embodiment,
Figures 8a-8c schematically show a sealer according to a fourth example embodiment.

### DETAILED DESCRIPTION

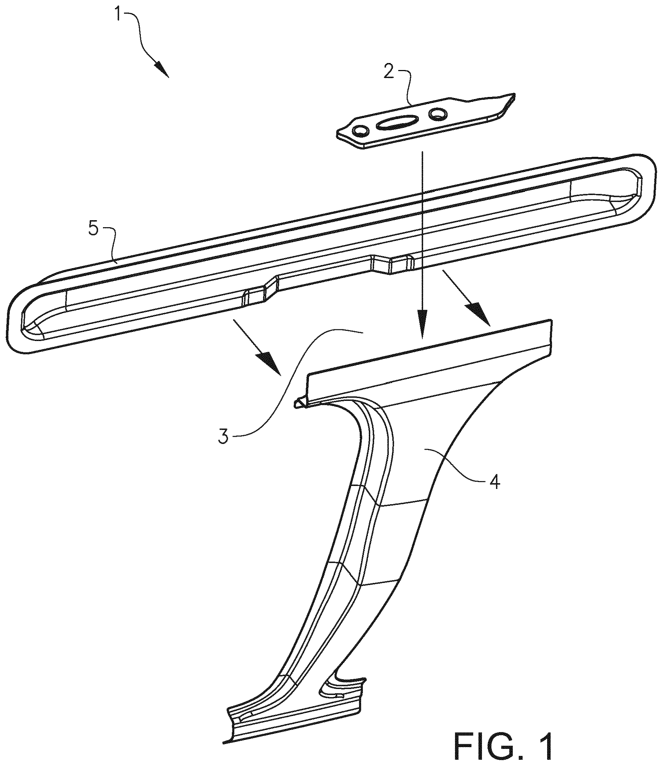

Figure 1 schematically shows a vehicle body arrangement 1 comprising a sealer 2. The sealer 2 is used to seal a vehicle body cavity 3. The vehicle body cavity 3 can be present in an arrangement comprising a single vehicle body assembly part or the vehicle body cavity 3 can be formed by assembling two or more vehicle body assembly parts.

The vehicle body arrangement 1 is in a first example a B-pillar. The vehicle body arrangement 1 comprises a first vehicle body assembly part 4 and a second vehicle body assembly part 5. A space between the first vehicle body assembly part 4 and a second vehicle body assembly part 5 forms the vehicle body cavity 3. Similar vehicle body cavities can also be found in for instance the A-, C- and D-pillars assemblies, engine room assemblies or in or between other parts of a vehicle chassis or body in white.

The sealer 2 is placed inside the vehicle body cavity 3. The sealer 2 is, in an initial state, able to be pre-shaped into an initial shape and is, on contact with a fluid, able to expand to a final shape and a final state. In the final state, the final shape essentially conforms to the shape of the vehicle body cavity 3 thereby sealing a specific part of the vehicle body cavity 3 or the entire vehicle body cavity 3. The initial shape can be a shape different from the shape of the vehicle body cavity 3 that enables the sealer 2 to be easily placed into the vehicle body cavity 3 or the initial shape can be a smaller scale shape of the final shape being easily placed into the vehicle body cavity 3.

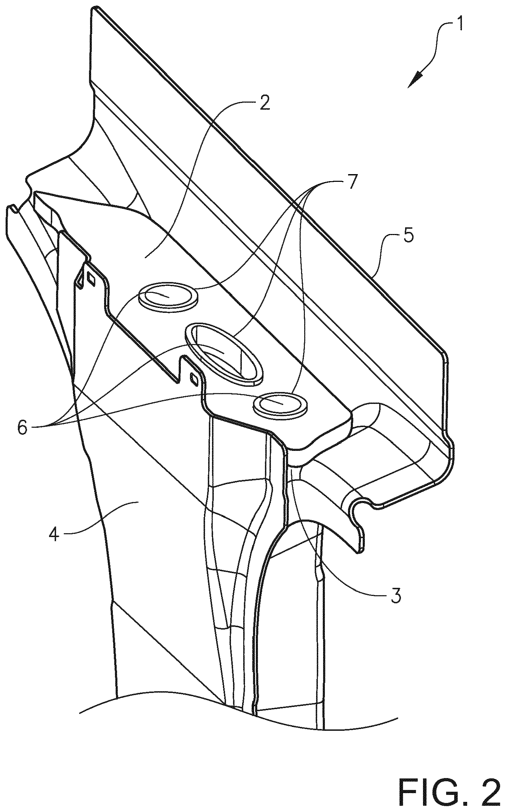

Figure 2 schematically shows the vehicle body arrangement 1 of figure 1 assembled. In figure 2 it can be seen that the sealer 2 is placed in the vehicle body cavity 3. It can also be seen that the sealer 2 comprises through holes 6. The through holes 6 are intended to function as cable ducts for cables running through the vehicle. In order for the through holes 6 to keep their shape when the sealer 2 expands, metallic or plastic O-rings 7 are placed in the through holes 6. The through holes 6 can also be used for draining excess fluid from the vehicle body arrangement 1 after the sealer 2 has expanded to its final state.

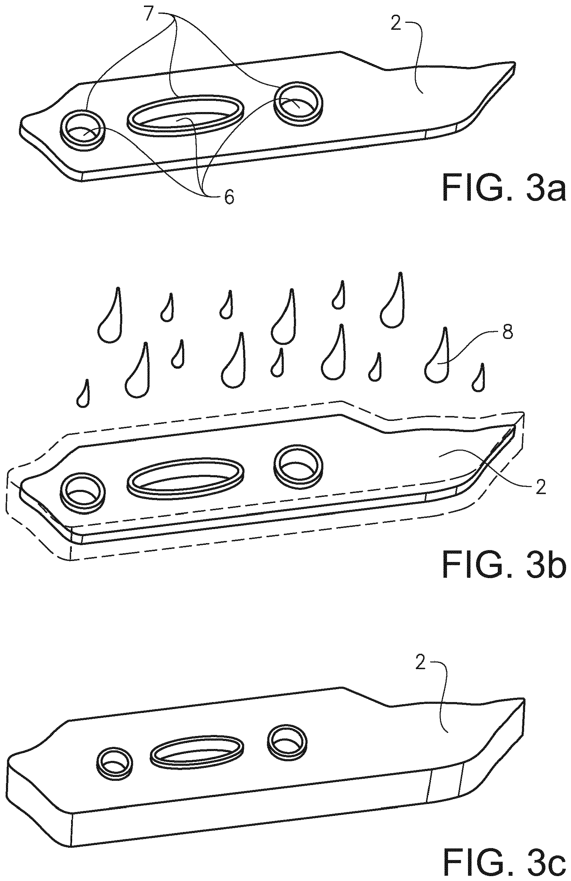

Figures 3a-3c schematically shows the expansion a sealer 2 from an initial shape to a final shape.

In figure 3a the sealer 2 is in an initial shape. The sealer 2 also comprises through holes 6 for draining excess fluid and/or as cable ducts with O-rings 7 inserted to keep the shape of the through holes 6.

In figure 3b the sealer 2 is activated with fluid 8 upon which it starts to expand to its final shape. This is indicated by the dashed line.

In figure 3c the vehicle body composition has reached its final shape. The expansion to the final shape can be determined by the amount of fluid 8 the sealer 2 is exposed to or that the sealer 2 has completely filled the vehicle body cavity 3 that it is placed in. Alternatively, depending on the viscosity of the fluid 8 different expansions can be obtained for a specific volume of fluid 8 exposed to the sealer 2. This means that the sealer 2 can reach an intermediate state and intermediate shape between the initial shape and initial state and final shape and final state.

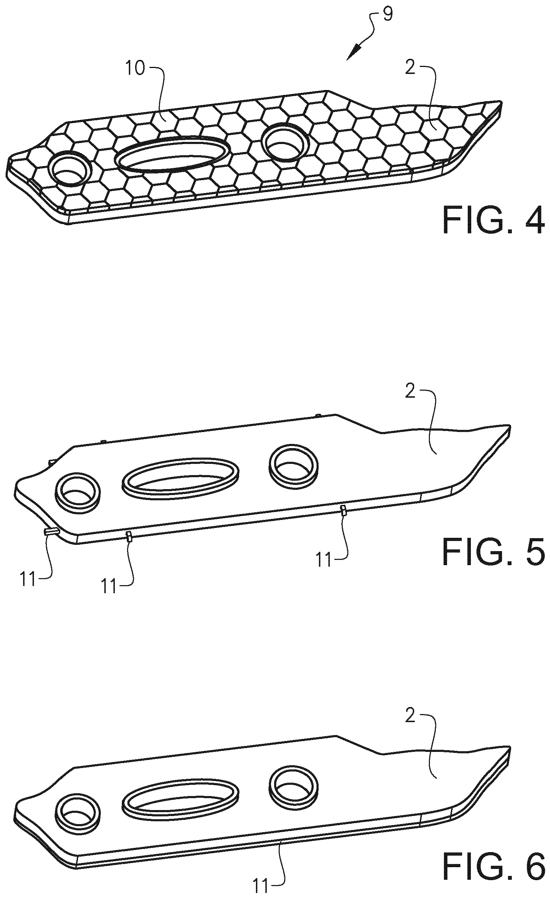

Figure 4 schematically shows a sealer 2 according to a second example embodiment. In the second example embodiment the sealer 2 is part of a sandwich construction 9. The sandwich construction 9 further comprises a fluid layer 10 placed on top of the sealer 2. The fluid layer 10 and the sealer are separated by a liquid impermeable barrier. The volume of the fluid in the fluid layer 10 can be dimensioned such that a specific desired expansion of the sealer 2 is achieved. The fluid reaches the sealer 2 by means of puncturing the fluid layer 10 with a sharp object. The puncturing of the fluid layer 10 can be done at any time after the placement of the sealer 2 in the vehicle body cavity 3.

The fluid 8 in the fluid layer 10 of the sandwich construction 9 can be coloured in order to easily identify where the sealer 2 is to be placed during assembly in case the sealer 2 has the same shape for multiple locations. For instance, one colour can be used to indicate that the sealer 2 will expand 10 %; another colour can be used to indicate that the sealer 2 will expand 20 %.

Figures 5 schematically show a sealer 2 comprising a first example of fastening means 11. In a first example the sealer 2 comprises curved elements such as hooks or grapples or straight elements such as a peg or a pin as fastening means 11. The curved or straights elements are made of plastic or a light metal. The curved or straight elements can be joined directly to the sealer 2 or can be part of a thin sheet around which the sealer 2 is placed. The vehicle body arrangement (not shown) has holes or recesses corresponding to the fastening means 11 in order to keep the sealer 2 in place.

Figure 6 schematically shows a sealer 2 comprising a second example of fastening means 11. In the second example the fastening means 11 comprises an adhesive placed on one side of the sealer 2. The adhesive is any adhesive suitable for attaching to a metallic or plastic surface. This embodiment is preferably used in a balk, pillar and tunnel or pipe construction in the vehicle.

Any of the two fastening means 11 described above can be used with both example embodiments described above. If necessary, both fastening means 11 can be used to further secure the sealer 2 in place.

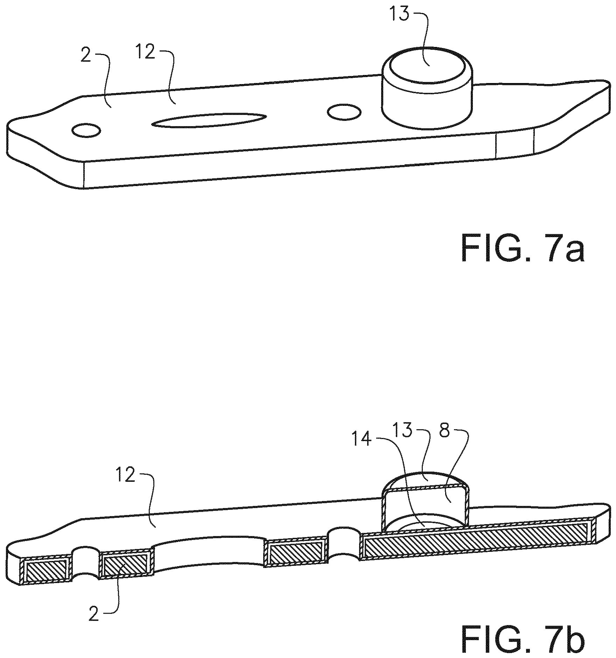

Figures 7a-7b schematically show a sealer 2 according to a third example embodiment. In figure 7a, the sealer further comprises an expandable cover 12 surrounding the sealer 2. The expandable cover 12 is made by rubber, for instance gum rubber, which does not hinder expansion of the sealer 2 from its initial state to its final state. The sealer 2 also comprises a flexible fluid storage container 13 placed on one side of the sealer 2. The flexible fluid storage container 13 is for instance made of rubber or a soft plastic.

Figure 7b shows a cross section of the sealer 2 along the length of the sealer 2. The flexible fluid storage container 13 contains the specific amount of fluid 8 required for a specific expansion of the sealer 2. An interface 14 between the fluid 8 in the flexible fluid storage container 13 and the sealer 2 is made from the same material as the expandable cover 12, but is thinner or made weaker in order to be able to break from the fluid pressure exerted on the interface 14 when the flexible fluid storage container 13 is compressed. The compression of the flexible fluid storage container 13 can be made manually or by a machine during the assembly process. The size of the interface 14 in figure 7b is for illustrative purposes only. The interface 14 can be a part of the area under the flexible fluid storage container 13 or the entire area under the flexible fluid storage container 13.

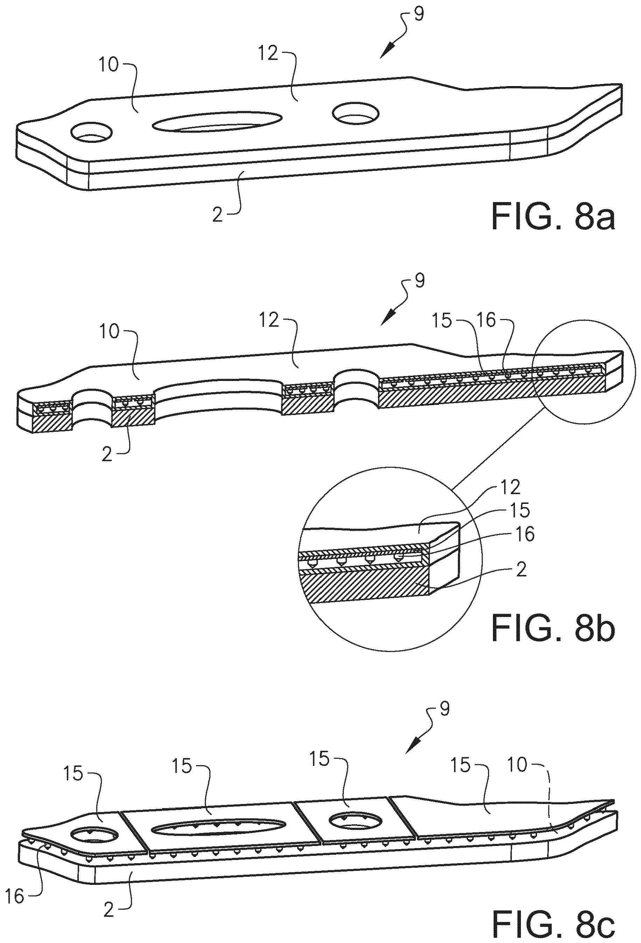

Figures 8a-8c schematically show a sealer sandwich construction 9 according to a fourth example embodiment. Figure 8a shows a sealer 2 as part a sandwich construction 9 with a fluid layer 10 placed on top of the sealer 2. In this example the fluid layer 10 is covered with the same material as the expandable cover 12 of figures 7a and 7b.

Figure 8b shows a cross section of the sandwich construction 9 along the length of the sandwich construction 9. Beneath the cover 12 one or more puncture means 15 are placed.

The puncture means 15 are made of a hard plastic material and comprises puncture elements 16 which punctures the barrier between the fluid layer 10 and the sealer 2 so that the fluid in the fluid layer 10 can penetrate the sealer 2 and activate the expansion.

Figure 8c shows an example of the sandwich construction 9 where the cover 12 is removed to illustrate an example of four puncture means 15 covering the entire surface of the sealer 2.

More than four puncture means 15 or less than four puncture means 15 can be used. Having more than one puncture means 15 ensures a better penetration over the entire surface by that each individual puncture means 15 is pressed. This allows each puncture element 16 on the respective puncture means 15 to penetrate the barrier between the fluid layer 10 and the sealer 2.

In order for the sealer 2 to dry out and reach its final shape it is possible to remove the cover 12 on the side of the sandwich construction 9 where it is certain that it will not be exposed to fluid. It is also possible to remove the flexible fluid storage container 13 and use the opening created when the interface 14 is broken. Alternatively a small hole can be made in the cover 12 to create a ventilation opening on the side of the sandwich construction 9 where it is certain that it will not be exposed to fluid.

Another example of colouring is when using fluids with different viscosities. The fluids can be coloured to indicate the activation time for the specific fluids, for instance one colour for fluid with a short activation time and a second colour for a gel-like fluid with a longer activation time. Another example of using colouring is to colour the sealer 2 before activation such that it is easy to identify which vehicle body arrangement the sealer 2 should be placed in. Different colours can also be used to indicate left and right sides of the vehicle. This colouring can be used for all embodiments of the invention.

If the shape of the sealer 2 it is irregular it may need a guide to control the expansion of the sealer. The guide may for instance be a metal or plastic sheet placed on the top and/or bottom of the sealer 2, or a metal or plastic rim surrounding the sealer 2. By placing one or more of these guides on the sealer 2, expansion can be controlled for each dimension (vertical/horizontal).

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive. The design of the sealing composition and the various parts thereof, for instance the position of the fastening means and the size and number of through holes are ultimately decided once the final design of the vehicle body arrangement and its cavity.

## Claims

1. Vehicle body arrangement (1) comprising a sealer (2), wherein the sealer (2) has the ability, in an initial state, to be pre-shaped to an initial shape, wherein the sealer (2) upon fluid contact has the ability to expand to a final shape and to a final state, the final shape conforming to a shape of a part of a vehicle body cavity (3) or to a vehicle body cavity (3) thereby sealing the part of the vehicle body cavity (3) or the vehicle body cavity (3), wherein the sealer is made from a sealing composition (2) being a fluid swellable rubber composition being activated by fluid in the initial state, comprising:
- a non-fluid swellable base rubber,
- a crosslinkable ethylene oxide based hydrophilic elastomer having at least one curable functional group, and
- a fluid swellable non-elastomeric material,
**characterized in that** the sealer (2) is part of a sandwich construction (9), wherein the sandwich construction (9) further comprises a fluid layer (10) placed on top of the sealer (2).

2. Vehicle body arrangement (1) according to claim 1, wherein the fluid swellable rubber composition comprises a compatibilizing agent.

3. Vehicle body arrangement (1) according to claim 1, wherein the sealer (2) expands by means of that the sandwich construction (9) is punctured such that the fluid in the fluid layer (10) comes in contact with the sealer (2).

4. Vehicle body arrangement (1) according to claim 1 or 3, wherein the amount of fluid in the fluid layer (10) determines the final state expansion of the sealer (2).

5. Vehicle body arrangement (1) according to any one of the preceding claims, wherein the sealer (2) comprises through holes (6).

6. Vehicle body arrangement (1) according to any one of the preceding claims, wherein the sealer (2) comprises fastening means (11) for attaching the sealer (2) in the vehicle body cavity (3) when the sealer (2) is in the initial shape.

7. Vehicle body arrangement (1) according to claim 5, wherein the fastening means (11) is one of:
- protrusions extending from the sealer (2),
- an adhesive layer affixed to the sealer (2).

8. Method for sealing a vehicle body cavity (3) in a vehicle body arrangement (1) with a sealer(2),
wherein the method comprises:
- producing a vehicle body arrangement (1) comprising at least one vehicle body cavity (3),
- pre-shaping the sealer (2) to an initial shape when in an initial state,
- placing the sealer (2) into the vehicle body cavity (3),
- activating the sealer (2) with fluid (8) in its initial state, causing the sealer (2) to expand to a final shape and final state conforming to a shape of a vehicle body cavity (3), thereby sealing the vehicle body cavity (3),
wherein
the sealer (2) is made from a fluid swellable rubber composition comprising:
- a non-fluid swellable base rubber,
- a crosslinkable ethylene oxide based hydrophilic elastomer having at least one curable functional group, and
- a fluid swellable non-elastomeric material, **characterized in that** the method comprises:
- placing a fluid layer (10) on top of the sealer (2) forming a sandwich construction (9),
- activating the sealer (2) by puncturing the fluid layer (10) and the sealer (2).

9. Method for sealing a vehicle body cavity (3), according to claim 8, wherein the method comprises:
- activating the sealer (2) with fluid during assembly of the vehicle by means of one or more of:
- lowering the body into a fluid bath,
- passing the body through a washing stage,
- spraying fluid (8) onto the sealer (2).

10. Method for sealing a vehicle body cavity (3) according to any one of claims 8-9, wherein the method comprises:
- providing the sealer (2) with fastening means (11) for attaching the sealer (2) in the vehicle body cavity (3) when the sealer (2) is in the initial state,
wherein the fastening means (11) is one of:
- protrusions extending from the sealer (2),
- an adhesive layer affixed to the sealer (2).

11. Method for sealing a vehicle body cavity (3) according to any one of claims 8-10, wherein the method further comprises:
- providing through holes (6) in the sealer (2).

## Patentansprüche

1. Fahrzeugkarosserieanordnung (1) umfassend ein Dichtmittel (2), wobei das Dichtmittel (2) die Fähigkeit hat, in einem Anfangszustand zu einer Anfangsform vorgeformt zu sein, wobei das Dichtmittel (2) die Fähigkeit hat, sich bei Fluidkontakt zu einer Endform und in einen Endzustand auszudehnen, wobei die Endform mit einer Form eines Teils eines Fahrzeugkarosseriehohlraums (3) oder mit einem Fahrzeugkarosseriehohlraum (3) übereinstimmt und dadurch den Teil des Fahrzeugkarosseriehohlraums (3) bzw. den Fahrzeugkarosseriehohlraum (3) abdichtet, wobei das Dichtmittel aus einer Dichtungszusammensetzung (2) gefertigt ist, die eine fluidquellbare Gummizusammensetzung ist, die im Anfangszustand durch Fluid aktiviert wird, umfassend:
- einen nicht fluidquellbaren Gummi,
- ein vernetzbares hydrophiles Elastomer, das auf Ethylenoxid basiert, mit zumindest einer härtbaren funktionellen Gruppe und
- ein fluidquellbares nicht elastomeres Material, **dadurch gekennzeichnet, dass** das Dichtmittel (2) Teil einer Sandwichkonstruktion (9) ist, wobei die Sandwichkonstruktion (9) ferner eine Fluidschicht (10) umfasst, die oben auf dem Dichtmittel (2) angeordnet ist.

2. Fahrzeugkarosserieanordnung (1) nach Anspruch 1, wobei die fluidquellbare Gummizusammensetzung ein Kompatibilisierungsmittel umfasst.

3. Fahrzeugkarosserieanordnung (1) nach Anspruch 1, wobei sich das Dichtmittel (2) dadurch ausdehnt, dass die Sandwichkonstruktion (9) so durchstochen wird, dass das Fluid in der Fluidschicht (10) mit dem Dichtmittel (2) in Kontakt kommt.

4. Fahrzeugkarosserieanordnung (1) nach Anspruch 1 oder 3, wobei die Fluidmenge in der Fluidschicht (10) die Endzustandsausdehnung des Dichtmittels (2) bestimmt.

5. Fahrzeugkarosserieanordnung (1) nach einem der vorangehenden Ansprüche, wobei das Dichtmittel (2) Durchgangslöcher (6) umfasst.

6. Fahrzeugkarosserieanordnung (1) nach einem der vorangehenden Ansprüche, wobei das Dichtmittel (2) Befestigungsmittel (11) umfasst, um das Dichtmittel (2) im Fahrzeugkarosseriehohlraum (3) zu befestigen, wenn sich das Dichtmittel (2) in der Anfangsform befindet.

7. Fahrzeugkarosserieanordnung (1) nach Anspruch 5, wobei das Befestigungsmittel (11) eines der folgenden ist:
- Vorsprünge, die sich vom Dichtmittel (2) erstrecken,
- eine Haftschicht, die am Dichtmittel (2) befestigt ist.

8. Verfahren zum Abdichten eines Fahrzeugkarosseriehohlraums (3) in einer Fahrzeugkarosserieanordnung (1) mit einem Dichtmittel (2),
wobei das Verfahren Folgendes umfasst:
- Fertigen einer Fahrzeugkarosserieanordnung (1), die zumindest einen Fahrzeugkarosseriehohlraum (3) umfasst,
- Vorformen des Dichtmittels (2) zu einer Anfangsform, wenn es sich in einem Anfangszustand befindet,
- Anordnen des Dichtmittels (2) im Fahrzeugkarosseriehohlraum (3),
- Aktivieren des Dichtmittels (2) in seinem Anfangszustand mit Fluid (8), Bewirken, dass sich das Dichtmittel (2) zu einer Endform und einen Endzustand ausdehnt, die bzw. der mit einer Form eines Fahrzeugkarosseriehohlraums (3) übereinstimmt, dadurch Abdichten des Fahrzeugkarosseriehohlraums (3),
wobei das Dichtmittel (2) aus einer fluidquellbaren Gummizusammensetzung gefertigt ist, die Folgendes umfasst:
- einen nicht fluidquellbaren Gummi,
- ein vernetzbares hydrophiles Elastomer, das auf Ethylenoxid basiert, mit zumindest einer härtbaren funktionellen Gruppe und
- ein fluidquellbares, nicht elastomeres Material, **dadurch gekennzeichnet, dass** das Verfahren Folgendes umfasst:
- Anordnen einer Fluidschicht (10) oben auf dem Dichtmittel (2) und Ausbilden einer Sandwichkonstruktion (9),
- Aktivieren des Dichtmittels (2) durch Durchstechen der Fluidschicht (10) und des Dichtmittels (2).

9. Verfahren zum Abdichten eines Fahrzeugkarosseriehohlraums (3) nach Anspruch 8, wobei das Verfahren Folgendes umfasst:
- Aktivieren des Dichtmittels (2) mit Fluid während der Montage des Fahrzeugs durch:
- Absenken des Körpers in ein Fluidbad,
- Führen des Körpers durch eine Waschstufe und/oder
- Sprühen von Fluid (8) auf das Dichtmittel (2).

10. Verfahren zum Abdichten eines Fahrzeugkarosseriehohlraums (3) nach einem der Ansprüche 8 - 9, wobei das Verfahren Folgendes umfasst:
- Bereitstellen des Dichtmittels (2) mit einem Befestigungsmittel (11) zum Befestigen des Dichtmittels (2) im Fahrzeugkarosseriehohlraum (3), wenn sich das Dichtmittel (2) im Anfangszustand befindet,
wobei das Befestigungsmittel (11) eines der folgenden ist:
- Vorsprünge, die sich vom Dichtmittel (2) erstrecken,
- eine Haftschicht, die am Dichtmittel (2) befestigt ist.

11. Verfahren zum Abdichten eines Fahrzeugkarosseriehohlraums (3) nach einem der Ansprüche 8 - 10, wobei das Verfahren ferner Folgendes umfasst:
- Bereitstellen von Durchgangslöchern (6) im Dichtmittel (2).

## Revendications

1. Agencement de corps de véhicule (1) comprenant un élément d'étanchéité (2), l'élément d'étanchéité (2) ayant la capacité, dans un état initial, d'être préformé en une forme initiale, l'élément d'étanchéité (2) ayant la capacité, au contact de fluide, de se dilater vers une forme finale et vers un état final, la forme finale se conformant à une forme d'une partie d'une cavité de corps de véhicule (3) ou à une cavité de corps de véhicule (3), scellant ainsi la partie de la cavité de corps de véhicule (3) ou la cavité de corps de véhicule (3), l'élément d'étanchéité étant fabriqué à partir d'une composition d'étanchéité (2) qui est une composition de caoutchouc gonflable par fluide activée par du fluide dans son état initial, comprenant :
- un caoutchouc de base gonflable sans fluide,
- un élastomère hydrophile réticulable à base d'oxyde d'éthylène ayant au moins un groupe fonctionnel durcissable, et
- un matériau non-élastomère gonflable par fluide, **caractérisé en ce que** l'élément d'étanchéité (2) fait partie d'une construction en sandwich (9), la construction en sandwich (9) comprenant en outre une couche de fluide (10) placée sur l'élément d'étanchéité (2).

2. Agencement de corps de véhicule (1) selon la revendication 1, dans lequel la composition de caoutchouc gonflable par fluide comprend un agent de compatibilité.

3. Agencement de corps de véhicule (1) selon la revendication 1, dans lequel l'élément d'étanchéité (2) se dilate par perforation de la construction en sandwich (9) de telle sorte que le fluide dans la couche de fluide (10) vient en contact avec l'élément d'étanchéité (2).

4. Agencement de corps de véhicule (1) selon la revendication 1 ou 3, dans lequel la quantité de fluide dans la couche de fluide (10) détermine l'expansion à l'état final de l'élément d'étanchéité (2).

5. Agencement de corps de véhicule (1) selon l'une quelconque des revendications précédentes, dans lequel l'élément d'étanchéité (2) comprend des trous traversants (6).

6. Agencement de corps de véhicule (1) selon l'une quelconque des revendications précédentes, dans lequel l'élément d'étanchéité (2) comprend un moyen de fixation (11) pour fixer l'élément d'étanchéité (2) dans la cavité de corps de véhicule (3) lorsque l'élément d'étanchéité (2) est dans la forme initiale.

7. Agencement de corps de véhicule (1) selon la revendication 5, dans lequel le moyen de fixation (11) est l'un parmi :
- des protubérances s'étendant à partir de l'élément d'étanchéité (2),
- une couche adhésive fixée sur l'élément d'étanchéité (2).

8. Procédé de scellement d'une cavité de corps de véhicule (3) dans un agencement de corps de véhicule (1) avec un élément d'étanchéité (2),
le procédé consistant à :
- fabriquer un agencement de corps de véhicule (1) comprenant au moins une cavité de corps de véhicule (3),
- préformer l'élément d'étanchéité (2) en une forme initiale lorsqu'il est à l'état initial,
- placer l'élément d'étanchéité (2) dans la cavité de corps de véhicule (3),
- activer l'élément d'étanchéité (2) avec un fluide (8) dans son état initial, provoquant l'expansion de l'élément d'étanchéité (2) vers une forme finale et un état final se conformant à une forme d'une cavité de corps de véhicule (3), scellant ainsi la cavité de corps de véhicule (3),
l'élément d'étanchéité (2) étant fabriqué à partir d'une composition de caoutchouc gonflable par fluide comprenant :
- un caoutchouc de base gonflable sans fluide,
- un élastomère hydrophile réticulable à base d'oxyde d'éthylène ayant au moins un groupe fonctionnel durcissable, et
- un matériau non élastomère gonflable par fluide,
**caractérisé en ce que** le procédé consiste à :
- placer une couche de fluide (10) sur l'élément d'étanchéité (2) formant une construction en sandwich (9),
- activer l'élément d'étanchéité (2) par perforation de la couche de fluide (10) et de l'élément d'étanchéité (2).

9. Procédé de scellement d'une cavité de corps de véhicule (3), selon la revendication 8, le procédé consistant à :
- activer l'élément d'étanchéité (2) avec un fluide pendant l'assemblage du véhicule au moyen d'une ou de plusieurs des actions suivantes :
- abaisser le corps dans un bain de fluide,
- faire passer le corps par une phase de lavage,
- pulvériser du fluide (8) sur l'élément d'étanchéité (2).

10. Procédé de scellement d'une cavité de corps de véhicule (3) selon l'une quelconque des revendications 8 et 9, le procédé consistant à :
- doter l'élément d'étanchéité (2) d'un moyen de fixation (11) pour fixer l'élément d'étanchéité (2) dans la cavité de corps de véhicule (3) lorsque l'élément d'étanchéité (2) est à l'état initial,
le moyen de fixation (11) étant l'un parmi :
- des protubérances s'étendant à partir de l'élément d'étanchéité (2),
- une couche adhésive fixée sur l'élément d'étanchéité (2).

11. Procédé de scellement d'une cavité de corps de véhicule (3) selon l'une quelconque des revendications 8 à 10, le procédé consistant en outre à :
- prévoir des trous traversants (6) dans l'élément d'étanchéité (2).
